# FASCICULE DE BREVET EUROPEEN

(11) **EP 2 712 744 B1**
(45) Date de publication et mention de la délivrance du brevet: **01.06.2016**
(21) Numéro de dépôt: 13185876.3
(22) Date de dépôt: 25.09.2013
(51) Int. Cl.: B60B 21/12, B64C 25/40, B64C 25/36, B60B 37/04

(54) **Roue d'aéronef à toc d'entraînement universel**
Flugzeugrad mit universellem Drehherz
An aircraft wheel with a universal drive dog

(30) Priorité: 01.10.2012 FR 1259295
(43) Date de publication de la demande: 02.04.2014
(73) Titulaire: Messier-Bugatti-Dowty, 78140 Vélizy-Villacoublay (FR)
(72) Inventeur: Barbu, Mirca, 78140 VELIZY-VILLACOUBLAY (FR); Remond, Sébastien, 78140 VELIZY-VILLACOUBLAY (FR)
(74) Mandataire: Parzy, Benjamin Alain

(56) Documents cités:
- EP-A2- 2 639 160
- BE-A- 628 456
- US-A- 1 059 765
- US-A- 1 378 494
- US-A- 2 338 699

## Description

L'invention concerne une roue d'aéronef destinée à être entraînée en rotation par un organe d'entraînement en rotation rapporté sur l'atterrisseur qui reçoit ladite roue.

### ARRIERE PLAN DE L'INVENTION

Différents dispositifs d'entraînement en rotation sont actuellement envisagés pour entraîner en rotation les roues des atterrisseurs d'aéronefs, évitant ainsi d'utiliser les groupes propulseurs de l'aéronef pour mouvoir celui-ci. Il s'agit souvent de mettre en rotation un entraîneur qui tourne selon le même axe de rotation que la roue, et de solidariser l'entraîneur à la roue par un ou plusieurs organes de liaison. Par exemple, le document FR2954752 illustre l'entraînement d'une roue d'aéronef par un entraîneur, en l'occurrence une couronne dentée montée tournante autour du frein, au moyen de bielles élastiques s'étendant entre l'entraîneur et la roue.

Le document US 1 378 494 A divulgue une roue d'aéronef selon le préambule de la revendication 1.

### OBJET DE L'INVENTION

Un but de l'invention est de proposer une roue pouvant être attelée facilement à divers dispositifs d'entraînement en rotation.

### RESUME DE L'INVENTION

En vue de la réalisation de ce but, on propose une roue d'aéronef comportant une jante adaptée à recevoir un pneumatique et un moyeu relié à la jante pour recevoir des roulements de guidage de la roue en rotation selon un axe de rotation sur un essieu de l'aéronef. Selon l'invention, la roue comporte au moins un toc qui s'étend en saillie latérale de la jante pour présenter deux faces parallèles et qui est percé d'une face à l'autre selon une direction orthoradiale.

Ainsi, la roue peut être entraînée simplement par une fourche solidaire de l'entraîneur qui vient chevaucher le toc de la roue. La roue peut encore être entraînée par une bielle attelée d'une part à l'entraîneur et d'autre part à une chape munie d'une queue filetée introduite dans le perçage du toc et fixée sur celui-ci à l'aide d'un écrou. La roue peut encore être entraînée en rapportant sur le toc un crochet qui vient accrocher une olive solidaire de l'entraîneur, ou en rapportant un doigt qui est encadré par une fourche de l'entraîneur.

Ainsi, le toc percé permet de multiples modes d'entraînement, de sorte que la roue ainsi équipée peut être proposée pour équiper des atterrisseurs d'aéronefs pouvant être pourvus de divers organes d'entraînement, équipés de moyens d'entraînement coopérant avec au moins l'un des tocs pour entraîner la roue en rotation.

### BREVE DESCRIPTION DES DESSINS

L'invention sera mieux comprise à la lumière de la description qui suit d'un mode particulier de réalisation, en référence aux figures des dessins annexés parmi lesquelles :
- la figure 1 est une vue en perspective d'une roue d'aéronef selon l'invention ;
- la figure 2 est une vue de détail de l'un des tocs de la roue de la figure 1 ;
- la figure 3 est une vue de détail de la roue de la figure 1 entraînée par un entraîneur à fourche ;
- la figure 4 est une vue de détail de la roue de la figure 1 équipée de chapes pour l'attelage de la roue à un entraîneur au moyen de biellettes ;
- La figure 5 est une vue de détail de la roue de la figure 1 équipée d'un crochet pour l'attelage de la roue à un entraîneur au moyen d'une fourchette.

### DESCRIPTION DETAILLEE DE L'INVENTION

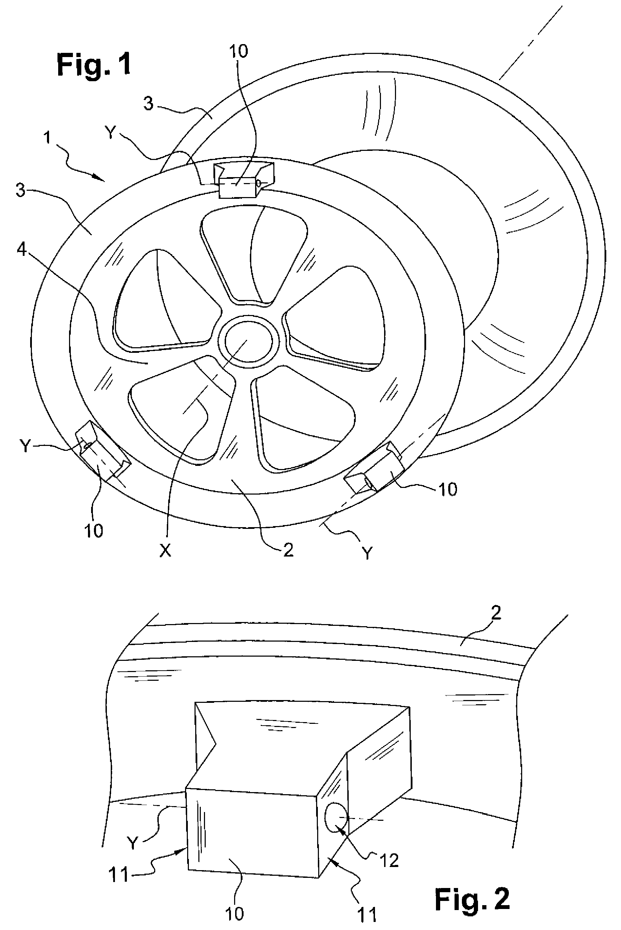

En référence tout d'abord à la figure 1, la roue 1 d'aéronef illustrée comporte une jante 2 avec des talons 3 propres à recevoir un pneumatique (non représenté). La jante 2 est reliée à un moyeu 5 au moyen d'un voile 4 pour permettre son montage à rotation autour d'un axe de rotation X sur un essieu ou une fusée d'atterrisseur. Ici, la roue 1 est réalisée sous la forme d'une roue entière à talon rapportable assemblé au moyen de boulons. Cependant, l'invention n'est pas limitée à ce type de roue et s'applique également d'autres types de roues, par exemple des roues composées de deux demi-roues.

Selon l'invention, la roue 1 comporte ici trois tocs 10 qui s'étendent en saillie latéralement d'un bord de la jante en étant régulièrement répartis à 120 degrés l'un de l'autre. Comme cela est visible à la figure 2, chacun des tocs 10 comporte des faces opposées 11 parallèles et est percé de part en part pour présenter un orifice 12 s'étendant selon une direction orthoradiale Y (c'est-à-dire selon une direction perpendiculaire à une direction axiale et perpendiculaire à une direction radiale). Les faces opposées 11 s'étendent perpendiculairement à l'axe ϕ. Les tocs 10 permettent de multiples modes d'entraînement en rotation de la roue par l'entraîneur d'un dispositif d'entraînement rapporté sur l'atterrisseur. Ici, pour les besoins de l'illustration, l'entraîneur est une roue dentée 100 montée tournante autour de l'axe X en étant guidée à la périphérie du frein (non visible). La roue dentée est mise en rotation par un moteur électrique non représenté.

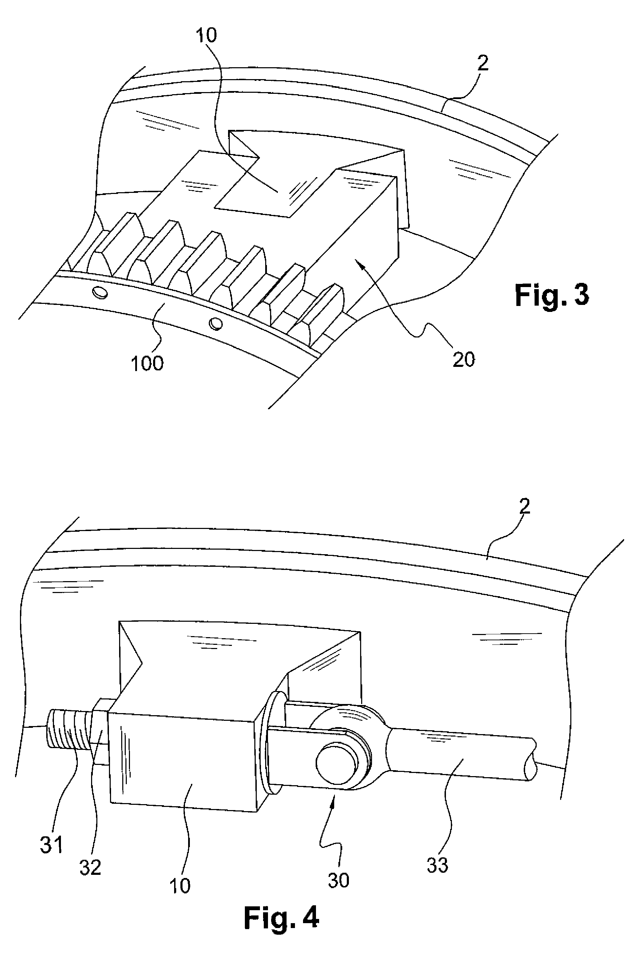

Selon un premier mode d'entraînement en rotation de la roue de l'invention illustré à la figure 3, le dispositif d'entraînement comprend un entraîneur 100 qui comporte une ou plusieurs fourches 20 qui viennent chacune chevaucher l'un des tocs. Chacune des fourches 20 coopère avec les faces parallèles 11 du toc 10 pour permettre la transmission d'un couple d'entraînement entre les fourches 20 et les tocs 10.

Selon un deuxième mode d'entraînement en rotation de la roue de l'invention illustré à la figure 4, les tocs 10 sont équipés de chapes 30 qui comportent une queue 31 à extrémité filetée qui peut être introduite dans l'orifice 12 de l'un des tocs 10. La chape 30 est retenue sur le toc 10 à l'aide d'un écrou 32 vissé sur l'extrémité de la queue 31. La chape ainsi rapportée permet l'attelage de l'extrémité d'une biellette 33 par ailleurs attelée à l'entraîneur.

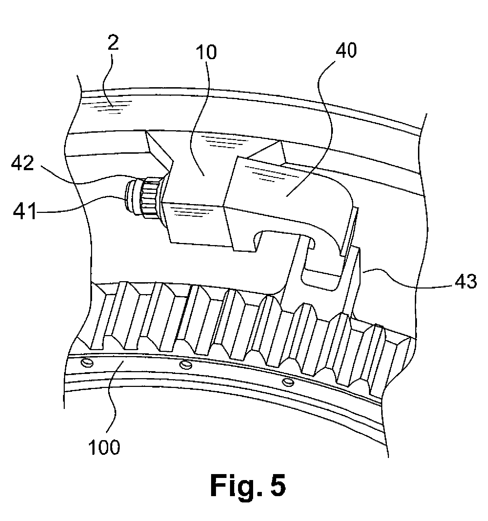

Selon un troisième mode d'entraînement en rotation de la roue de l'invention illustré à la figure 5, les tocs 10 sont équipés de doigts crochus 40 rapportés sur les tocs et dont les extrémités sont ici engagées par des fourches 43 portées par l'entraîneur. Ici, les doigts 40 comportent également une queue 41 à extrémité filetée engagée dans l'orifice du toc 10 et maintenue à l'aide d'un écrou 42 vissé sur l'extrémité de la queue.

## Revendications

1. Roue d'aéronef comportant une jante adaptée à recevoir un pneumatique et un moyeu relié à la jante (2) pour recevoir des roulements de guidage de la roue en rotation selon un axe de rotation (X) sur un essieu de l'aéronef, la roue comportant au moins un toc (10) qui s'étend en saillie latérale de la jante pour présenter deux faces parallèles (11) et qui est percé d'un orifice (12) s'étendant d'une face à l'autre selon une direction orthoradiale (Y), **caractérisée en ce que** ce toc (10) est apte à coopérer avec des moyens d'entraînement (20 ; 33 ; 43) d'un organe d'entraînement (100) équipant l'aéronef afin d'entraîner cette roue d'aéronef en rotation.

2. Roue d'aéronef selon la revendication 1, comportant trois tocs (10, 10, 10) circonférentiellement espacés à 120 degrés l'un de l'autre.

3. Procédé d'entraînement en rotation d'une roue selon la revendication 1 ou la revendication 2, dans lequel on équipe l'aéronef d'un organe d'entraînement (100) en rotation muni de moyens d'entraînement (20 ; 33 ; 43) aptes à coopérer avec le ou les toc.

4. Procédé selon la revendication 3, dans lequel on munit l'organe d'entraînement d'une ou de plusieurs fourches (20) d'entraînement adaptées à chevaucher chacune un toc pour transmettre un couple de rotation par appui de la fourche sur l'une des faces parallèles du toc.

5. Procédé d'entraînement en rotation d'une roue selon la revendication 3, dans lequel on munit l'organe d'entraînement (100) en rotation d'une biellette (33) d'entraînement ayant une extrémité attelée à une chape (30) rapportée sur le toc (10).

6. Procédé selon la revendication 5, dans lequel la chape est équipée d'une queue (31) à extrémité filetée engagée dans l'orifice du toc pour la fixation de la chape sur le toc au moyen d'un écrou.

7. Procédé d'entraînement en rotation d'une roue selon la revendication 3, dans lequel on munit l'organe d'entraînement (100) en rotation d'une fourche (43) qui reçoit l'extrémité d'un doigt crochu (40) rapporté sur le toc (10).

8. Procédé selon la revendication 7, dans lequel le doigt crochu est équipé d'une queue (41) à extrémité filetée engagée dans l'orifice du toc pour la fixation du doigt crochu sur le toc au moyen d'un écrou.

## Patentansprüche

1. Luftfahrzeugrad, umfassend eine Felge, die daran angepasst ist, einen Reifen aufzunehmen, sowie eine mit der Felge (2) verbundene Radnabe, um Führungsrollen zur drehenden Führung des Rades um eine Drehachse (X) auf einer Radachse des Luftfahrzeugs aufzunehmen, wobei das Rad mindestens ein Drehherz (10) umfasst, das seitlich von der Felge vorsteht, um zwei parallele Flächen (11) aufzuweisen, und das von einer Öffnung (12) durchbohrt ist, die sich von einer Fläche zur anderen in einer orthoradialen Richtung (Y) erstreckt, **dadurch gekennzeichnet, dass** dieses Drehherz (10) dazu geeignet ist, mit Antriebsmitteln (20; 33; 43) zum Antrieb eines Antriebsorgans (100), mit dem das Luftfahrzeug ausgestattet ist, zusammenzuwirken, um dieses Luftfahrzeugrad drehend anzutreiben.

2. Luftfahrzeugrad nach Anspruch 1, umfassend drei Drehherzen (10, 10, 10), die in Umfangsrichtung um 120 Grad zueinander beabstandet sind.

3. Verfahren zum Drehantrieb eines Rades nach Anspruch 1 oder Anspruch 2, wobei man das Luftfahrzeug mit einem Drehantriebsorgan (100) ausstattet, das mit Antriebsmitteln (20; 33; 43) versehen ist, die dazu geeignet sind, mit dem oder den Drehherzen zusammenzuwirken.

4. Verfahren nach Anspruch 3, wobei man das Antriebsorgan mit einer oder mehreren Antriebsgabeln (20) ausstattet, die daran angepasst sind, jeweils auf einem Drehherz zu sitzen, um ein Drehmoment durch Anlage der Gabel an einer der parallelen Flächen des Drehherzens zu übertragen.

5. Verfahren zum Drehantrieb eines Rades nach Anspruch 3, wobei man das Drehantriebsorgan (100) mit einer Antriebsstange (33) versieht, die ein Ende hat, das an einen an dem Drehherzen (10) befestigten Gabelkopf (30) gekoppelt ist.

6. Verfahren nach Anspruch 5, wobei der Gabelkopf mit einer Stange (31) mit Gewindeende ausgestattet ist, die zur Befestigung des Gabelkopfes an dem Drehherzen mittels einer Mutter in die Öffnung des Drehherzens eingefügt ist.

7. Verfahren zum Drehantrieb eines Rades nach Anspruch 3, wobei man das Drehantriebsorgan (100) mit einer Gabel (43) versieht, die das Ende eines gebogenen Fingers (40) aufnimmt, der an dem Drehherzen (10) angebracht ist.

8. Verfahren nach Anspruch 7, wobei der gebogene Finger mit einer Stange (41) mit Gewindeende ausgestattet ist, die zur Befestigung des gebogenen Fingers an dem Drehherzen mittels einer Mutter in eine Öffnung des Drehherzens eingefügt ist.

## Claims

1. An aircraft wheel comprising a rim adapted to receive a tire, and a hub connected to the rim (2) in order to receive bearings for guiding the wheel in rotation about an axis of rotation (X) on an axle of the aircraft, the wheel being **characterized in that** it includes at least one dog (10) that projects laterally from the rim in order to present two parallel faces (11) and that is pierced by an orifice (12) extending from one face to the other along a generally orthoradial direction (Y).

2. An aircraft wheel according to claim 1, having three dogs (10, 10, 10) that are circumferentially spaced apart at 120° from one another.

3. A method of driving a wheel according to claim 1 or claim 2 in rotation, wherein the aircraft is fitted with a rotary drive member (100) provided with drive means (20; 33; 43) suitable for co-operating with the dog(s).

4. A method according to claim 3, wherein the drive member is provided with one or more drive forks (20) suitable for fitting astride a respective dog in order to transmit rotary torque by the fork bearing against one of the parallel faces of the dog.

5. A method according to claim 3 for driving a wheel in rotation, wherein the rotary drive member (100) is provided with a drive link (33) having one end coupled to a lug (30) fitted to the dog (10).

6. A method according to claim 5, wherein the lug is fitted with a shank (31) having a threaded end, the shank being engaged in the orifice of the dog in order to fasten the lug to the dog by means of a nut.

7. A method according to claim 3 for driving a wheel in rotation, wherein the rotary drive member (100) is provided with a fork (43) that receives the end of a hooked finger (40) fitted on the dog (10).

8. A method according to claim 7, wherein the hooked finger is fitted with a shank (41) having a threaded end, the shank being engaged in the orifice of the dog in order to fasten the hooked finger to the dog by means of a nut.
